## Europäisches Patentamt
## European Patent Office
## Office européen des brevets

(11) Publication number: **0 020 972**
**B1**

(12) **EUROPEAN PATENT SPECIFICATION**

(45) Date of publication of patent specification: **11.05.83**

(51) Int. Cl.³: **G 06 F 15/06, G 06 F 9/32**

(21) Application number: **80102558.6**

(22) Date of filing: **09.05.80**

(54) **Program controlled microprocessing apparatus.**

(30) Priority: **22.06.79 US 51261**

(43) Date of publication of application:
**07.01.81 Bulletin 81/1**

(45) Publication of the grant of the patent:
**11.05.83 Bulletin 83/19**

(84) Designated Contracting States:
**BE CH DE FR GB IT LI NL SE**

(56) References cited:
**US - A - 4 153 933**

(73) Proprietor: **International Business Machines Corporation**
**Armonk, N.Y. 10504 (US)**

(72) Inventor: **Homan, Merle Edward**
**236 Old Adobe Road**
**Los Gatos California 95030 (US)**
Inventor: **Machol, Guenther Keith**
**13597 Ronnie Way**
**Saratoga California 95070 (US)**
Inventor: **Warren, Larry Michael**
**13095 Colony Avenue**
**San Martin California 95046 (US)**

(74) Representative: **Lewis, Alan John**
**IBM United Kingdom Patent Operations Hursley Park**
**Winchester, Hants, S021 2JN (GB)**

Courier Press, Leamington Spa, England.

Program controlled microprocessing apparatus

The present invention relates to program controlled microprocessing apparatus and is more particularly concerned with such apparatus comprising a single chip digital microcomputer or microprocessor which can be selectively operated in response to instructions stored on the computer chip or in response to instructions stored external to the chip.

There has been a recent increase in the use of microcomputers to perform many highly specialized uses. One reason for this increase is the development of a microcomputer containing a microprocessor, a program store, a random access store, and input/output device controllers on one monolithic integrated chip. Because the microcomputer is built on a single chip, the capacity of the instruction store is necessarily small due to the limited chip area. In some applications it is desirable to have additional program storage available. Prior art systems have solved this problem by utilizing an external storage unit to store additional instructions. The instructions stored in the external storage are accessed by sending the address from the on-chip address register to the external store. This mode of operation has the disadvantage that the capacity of the external storage is limited by the number of address bits that can be sent. A finite number of I/O pins is available on the chip and this limitation, along with the desire to limit the chip area devoted to the address register, limits the number of address bits that can be sent.

U.S. Specification No. 4,153,933 (Blume et al) is exemplary of the prior art and describes a digital computer formed on a single silicon substrate. The computer comprises a random-access memory (RAM) and a programmable read-only memory (PROM) for storing computer instructions. The PROM is addressed from a program counter which provides a twelve-bit address to the PROM. The program counter is also able to provide a twelve-bit address to an off-chip program storage means to access additional instructions stored therein. Both the instruction accessed from the PROM and from the off-chip storage are supplied to an on-chip instruction register and gated from that register to an instruction decoder circuit.

The Blume computer has the limitation that the off-chip storage is addressed using an address generated on the chip. This on-chip generation and transmission of the total address to the off-chip storage limits the amount of off-chip storage that can be accessed. The present invention is concerned with this problem of the prior arts limitation on the amount of off-chip storage that can be accessed from a single chip microprocessor.

It is therefore a principal object of this invention to provide unlimited off-chip program storage usable with no degradation of performance and without the requirement for additional I/O pins or active area on the chip.

Accordingly the invention provides program controlled microprocessing apparatus comprising a semiconductor chip having a microprocessor formed thereon including a first instruction register for containing current instructions controlling the microprocessor, a first addressable instruction store, a first instruction counter and a first instruction sequencing means for accessing instructions from the first store; a second and off-chip addressable instruction store; circuit means enabling the first instruction register to be alternatively loaded from the first or second instruction store; and instruction mode selection means for selecting whether the next instruction to be loaded into the first instruction register is loaded from the first or second instruction store, said apparatus being characterised by further comprising a second instruction counter and a second instruction sequencing means for accessing instructions from the second instruction store, said second instruction counter and said second sequencing means being formed externally of the chip.

The invention will now be more particularly described with reference to an example of a program controlled microprocessing apparatus embodying the invention, illustrated in the accompanying drawings, in which:—

Fig. 1 is a schematic data-flow diagram of a single-chip microcomputer in which the invention is particularly useful;

Fig. 2 is a schematic block diagram showing the external address apparatus for the microcomputer of Fig. 1;

Fig. 3 is a timing diagram which illustrates the relative timings of the signals to control the microcomputer components;

Fig. 4 is a diagram showing the general instruction format of the short instructions for the microcomputer of Fig. 1;

Fig. 5 is a diagram showing the instruction format of the long instructions for the microcomputer of Fig. 1;

Fig. 6 is a schematic block diagram of the instruction accessing apparatus of the microcomputer of Fig. 1;

Figs. 7 and 8 are logic diagrams showing the part of the control logic of Fig. 6 relating to selection of instruction source for the microcomputer of Fig. 1.

Description of the preferred embodiment

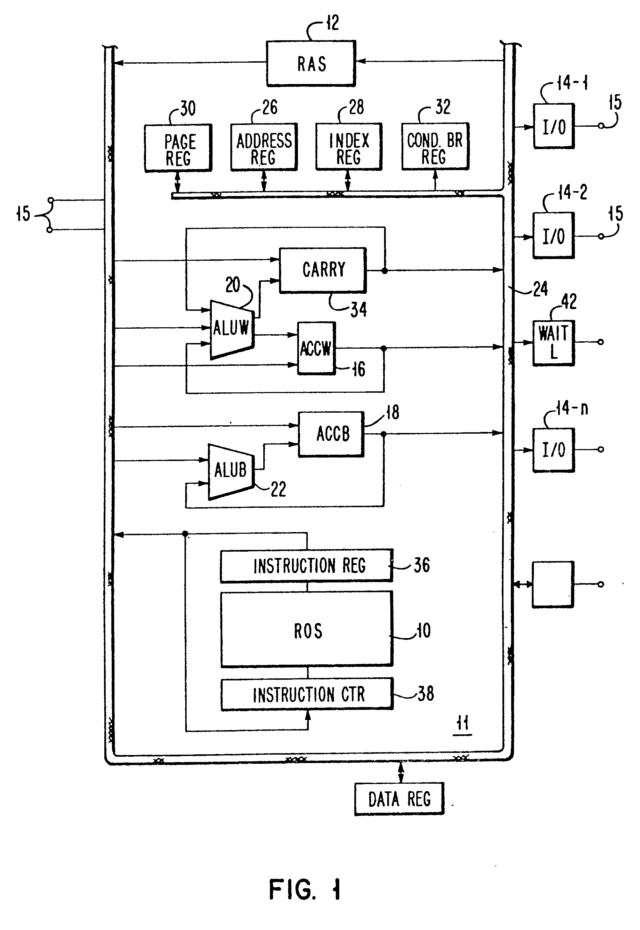

The apparatus of the present invention may be employed in any suitable stored program computer in which it is required to execute both internally stored and externally stored instructions. However, by way of example, the invention is described as specifically embodied in the microcomputer shown in Fig. 1.

The microcomputer is utilized along with a clock chip and a utilization device which, in a specific system, is a communication loop. The details of the interaction between the microcomputer and the communication loop are not disclosed, since they are not necessary to an understanding of the invention. Fig. 1 is a block diagram of the major parts of a microcomputer utilized in the present invention. The microcomputer includes on a single chip 11 Read Only Storage (ROS) means 10, and Random Access Storage Means (RAS) 12. The ROS 10 contains a large number, 1,024 for example, of instruction words of twelve bits per word, for example, and is used to store the program which operates the system. The RAS 12 contains, for example, 128 read-write storage cells of four bits each, for example, available for working storage and data buffering. Two groups of instructions are provided. Bit mode instructions operate on a single bit of data, while word mode instructions operate on a data word (four bits in the specific embodiment shown). The microcomputer has arithmetic and logic means which utilizes two accumulators and two Arithmetic and Logic Units (ALU). One accumulator 16 and ALU 20 are used for executing word instructions and the second accumulator 18 and second ALU 22 are utilized for executing bit instructions. Space is provided on the chip for specialized I/O interface adapters 14-1 through 14-N and communication between these interfaces and the CPU is provided by system bus 24. Each of the outputs are latched and available to the processor as a destination and coupled to appropriate I/O pins 15. Several signals are presented as inputs to system bus 24 through appropriate I/O pins 15. Each of these input signals is available to the processor as a source.

Basic clock control of the microcomputer is supplied by a clock chip (not shown). These clock signals (see Fig. 3) comprise +CLOCK 2, which is used to increment the instruction counter 38. One instruction is executed for each +CLOCK 2 cycle except for two cycle operations such as a conditional branch, for example. Appropriate signals are provided to continuously operate the RAS 12 on the chip, and also provided is the signal ROS RESTORE and other appropriate signals needed to operate the ROS 10 on the chip. The —BUS CLK signal is used to gate data onto the system bus 24. The relative timing of the various stages in the process of accessing and executing an instruction are shown in Fig. 3.

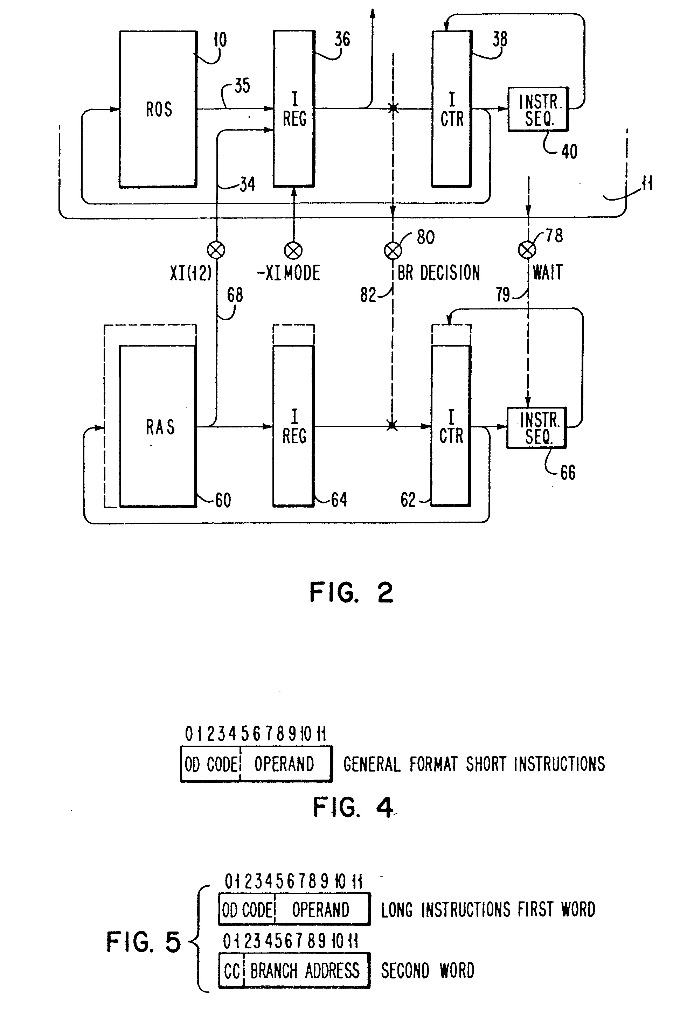

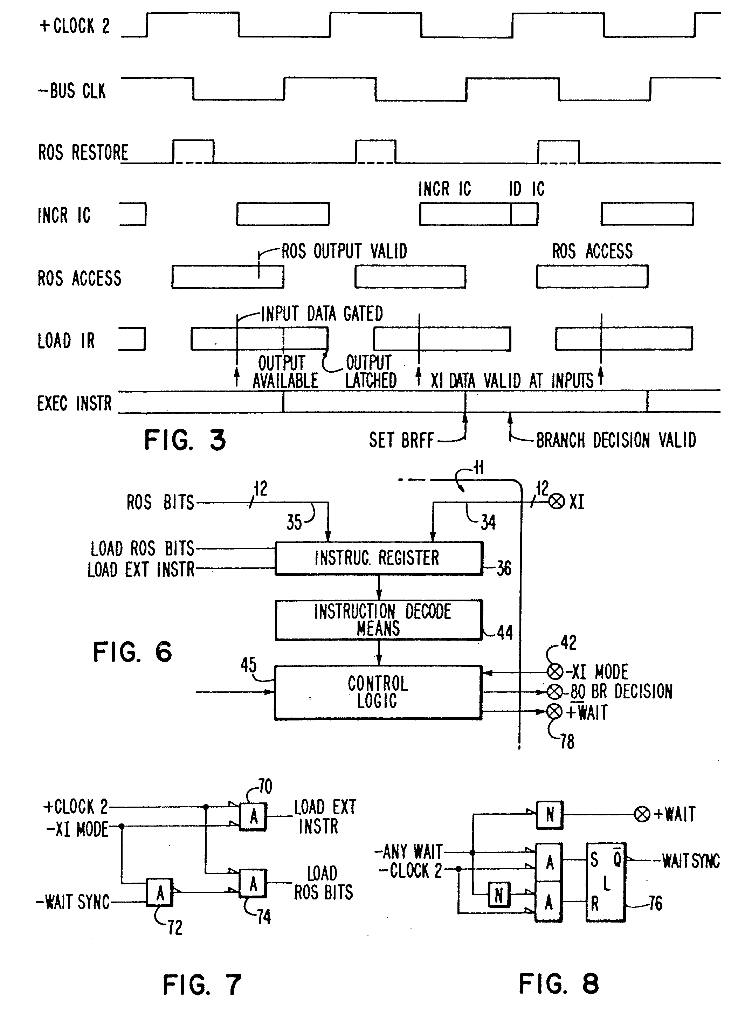

The ROS timing signals control the accessing of the program instructions specified by the address in instruction counter 38 (Figs. 1 and 2), and the operation to be performed is decoded by instruction decode means 44 (Fig. 6). Logic circuits 45 receive signals from decode means 44 and machine state information for generating control signals to execute the instruction. Conductor means are provided to transfer data and control signals from instruction decode means 44 and control logic 45 to RAS 12 and a plurality of internal registers including index register 28, page register 30, address register 26 and conditional branch register 32.

The instructions for the microcomputer are of two types. Those which reference or operate on a word (four bits) of information, and those which reference or operate on a single bit. The operation code determines whether an instruction is of the word or bit type. There are two instruction formats used with the microcomputer: A short instruction is one ROS word (twelve bits) and normally executed in one instruction cycle. A long instruction is two ROS words and normally is executed in two cycles. The general instruction format is shown in Fig. 4 for short instructions and Fig. 5 for long instructions. In the short instructions, the high order bits 0 through 4 define the operation code and bits 5 through 11 comprise the operand field. The operand field may designate a source, a destination, or modifiers. The long instructions are two ROS words long and the first word has the same format as the short instruction. When the first word is decoded, the branch flip-flop is set to indicate that the next word is the second of the branch instruction words. The second word (see Fig. 5) utilizes bits 0 and 1 to form a branch condition code. Bits 2 through 11 define the branch address. After the second word is processed, the branch flip-flop is reset. In word mode instructions, either the word accumulator 16 or the address register 26 is implied. This group of instructions comprises move operations, register operations, logical operations, arithmetic operations, branch operations, and input/output operations. In bit mode instruction, the bit accumulator 18 is implied. This group of instructions comprises move operations, logic operations, set operations, and branch operations.

The novel aspects of the operation of the system in executing both bit and word instructions and the instructions used are described in greater detail and claimed in co-pending application No. 79 1045859.

The apparatus for executing external instructions in the microcomputer of Fig. 1 is shown in Fig. 2. The parts of the microcomputer on chip 11 which relate to the addressing and accessing of instructions is shown. As previously described, ROS 10 stores the instructions and the contents of instruction counter 38 is used to address the next instruction to be executed. Instruction sequencing means 40 comprises the control logic on the chip which provides the means for incrementing instruction counter 38 at the appropriate time (see Fig. 3). The instruction is read from ROS 10 and stored in instruction register 36. External to the chip 11 is a Random Access Storage (RAS) 60, which is addressed by Instruction Counter 62, and the addressed instruction is read out to Instruction Register 64. A sequence of instructions to control the microcomputer is stored in external RAS 60 and these instructions can be accessed by the address in instruction counter 62 as controlled by instruction sequencing control means 66.

In contrast to prior art systems in which externally stored instructions were accessed by instructions generated on the chip, the present system provides externally generated addresses. The on-chip microcomputer and the external addressing means are kept in cycle by cycle synchronism by operating the external apparatus from the same clock pulse source. The signals BR DECISION and WAIT are transmitted from the chip 11 to the external circuits to induce a program branch or halt in the externally generated instruction sequence at points in time determined by on-chip 11 control means.

During normal operation of the microcomputer an instruction is accessed from on-chip ROS 10 as specified by the address counter 38 and in parallel with this operation an instruction is accessed from the external RAS 60 as specified by external instruction counter 62. However, the system can also be operated by taking all instructions from either the on-chip ROS 10 or the external RAS 60, if desired. The externally accessed instruction (12 bits) is transmitted by suitable conductive path 68 to the twelve XI I/O pins on the microcomputer chip designated $XI_0$ to $XI_{11}$. The external instruction is selectively transmitted over conductive path 34 for loading into on-chip instruction register 36. The control for this selective operation is provided by a control voltage to the I/O pin designated XI MODE. This control signal may be generated by any suitable means such as a switch, a signal from an external operation or by other means at the option of the user. In a specific example, the signal may have a down digital level of ground potential and an up digital level of +5 volts. When the appropriate control voltage level is present at the XI MODE I/O pin, the instruction is loaded from the twelve XI I/O pins over conductive path 34 to instruction register 36. However, when the control voltage is not present at the XI MODE pin, the instruction is loaded over conductive path 35 from the on-chip ROS 10.

To maintain the appropriate sequence of instruction control when using the external instruction store, the signal BR DECISION is provided on I/O pin 80 and transmitted to the external storage sequencing means 66. When active, this signal causes the branch address in off-chip instruction register 64 to be transferred to the off-chip instruction counter 62 so that the next instruction loaded from the twelve XI I/O pins will be from the location in RAS 60 pointed to by the branch address.

When BR DECISION is not active, the off-chip instruction counter 62 is stepped by the instruction sequencing control means 66 to address the next sequential instruction in off-chip RAS 60.

The number of address bits in the external RAS 60, instruction register 64, and instruction counter 62 is a function of the RAS 60 size, which may be and is generally greater than for the corresponding on-chip components. In this case, the low order bits will contain the standard instruction information and the additional high order bits will be used for external branch address information.

Thus this system has the advantage that instructions can be selectively executed either from the on-chip instruction store or from the external instruction store without a limitation on the size of the external store because of the number of address bits available on the computer chip. The external store can be of any desired size since its instruction counter is also located external to the chip and thus is not constrained in size by on-chip circuit area considerations or I/O pin constraints.

In the specific embodiment shown the control of the instruction source is provided by control logic means 45 (Fig. 6). As shown in Figs. 7 and 8, the −XI MODE signal and the +CLOCK 2 signal are coupled to AND circuit 70. The convention in these logic circuits is that a wedge on a line means that the down level of the digital signal is the active level. Thus, when the −XI MODE pin is at an up digital level (positive) AND circuit 70 is not conditioned; however, AND circuits 72 and 74 are conditioned to generate the signal LOAD ROS BITS if the WAIT SYNC latch is not set. When the −XI MODE input is at the down digital level (negative) AND circuit 70 is conditioned to generate the signal LOAD EXT INSTR.

The microcomputer has the capability of entering a WAIT state in which execution of instructions is inhibited until some predetermined event occurs. The WAIT SYNC latch 76 is set or reset at the beginning of an instruction cycle by the presence or absence of a signal generated from any of the WAIT latches 42 in Fig. 1 indicating that the microcomputer is to enter the WAIT state. The WAIT signal is available as an external output at pin 78, and it is coupled by conductor means 79 to external instruction sequencing means 66 to inhibit changing instructions on the External Instruction (XI) input when the microcomputer is in the WAIT state.

Instruction register 36 (Figs. 1, 2, and 6) is a parallel loadable register with inputs from ROS 10 on lines 35 and from the externally provided instruction on lines 34. The signals LOAD ROS BITS and LOAD EXT INSTR are coupled to instruction register 36 to load the instruction from the appropriate source depending on which of the signals is active.

To indicate to the external instruction store that a branch should be taken, the signal BR DECISION is generated. This signal indicates that the conditions for a Branching instruction

7      **0 020 972**      8

have been met and the signal is coupled to I/O pin 80 and over conductor means 82 to the external instruction counter 62.

While the invention has been particularly shown and described with reference to preferred embodiments thereof, it will be understood by those skilled in the art that the foregoing and other changes in form and detail may be made therein without departing from the spirit, scope and teaching of the invention. Accordingly, the apparatus herein disclosed is to be considered merely as illustrative, and the invention is to be limited only as specified in the claims.

## Claims

1. Program controlled microprocessing apparatus comprising a semiconductor chip (11) having a microprocessor formed thereon including a first instruction register (36) for containing current instructions controlling the microprocessor, a first addressable instruction store (10), a first instruction counter (38) and a first instruction sequencing means (40, Fig. 2) for accessing instructions from the first store; a second and off-chip addressable instruction store (60, Fig. 2); circuit means (35, 68) enabling the first instruction register (36) to be alternatively loaded from the first or second instruction store (10, 60); and instruction mode selection means (45, Fig. 6) for selecting whether the next instruction to be loaded into the first instruction register is loaded from the first or second instruction store, said apparatus being characterised by further comprising a second instruction counter (62, Fig. 2) and a second instruction sequencing means (66, Fig. 2) for accessing instructions from the second instruction store (60), said second instruction counter and said second sequencing means being formed externally of the chip.

2. Apparatus as claimed in claim 1, further characterised by the provision of means (80, 82), responsive to an on-chip generated branch signal indicating that the conditions for a required branch have been met, for altering the contents of the second instruction counter (62) to the count corresponding to the address of the required branch instruction.

3. Apparatus as claimed in claim 2, further characterised in that the altering means comprise, external of the chip, a second instruction register (64) and means for gating the contents thereof to the second instruction counter on receipt of the branch signal.

4. Apparatus as claimed in claim 1, 2 or 3, further characterised by the provision of means (78, 79) responsive to an on-chip generated wait signal for inhibiting operation of the second instruction sequencing means (66).

## Patentansprüche

1. Programmgesteuerte Mikroprozessoranordnung mit einem Halbleiterchip (11), das einen Mikroprozessor enthält, einschließlich eines ersten Instruktionsregisters (36) für die Aufbewahrung laufender Instruktionen, die den Mikroprozessor steuern, eines ersten adressierbaren Instruktionsspeichers (10), eines ersten Instruktionszählers (38) und einer ersten Instruktionsfolgesteuerung (40; Fig. 2) zum Abruf von Instruktionen aus dem ersten Speicher, mit einem zweiten und außerhalb des Chips adressierbaren Instruktionsspeicher (60; Fig. 2), mit Schaltungsmitteln (35, 68), die es dem ersten Instruktionsregister (36) gestatten, alternativ vom ersten (10) oder zweiten Instruktionsspeicher geladen zu werden und mit Instruktionsmodus-Selektionsmitteln (45; Fig. 6) für die Auswahl, ob die nächste Instruktion, die in das erste Instruktionsregister geladen werden soll, von dem ersten oder zweiten Instruktionsspeicher geladen wird, dadurch gekennzeichnet, daß ferner ein zweiter Instruktionszähler (62; Fig. 2) und eine zweite Instruktionsfolgesteuerung (66; Fig. 2) zum Abruf von Instruktionen aus dem zweiten Instruktionsspeicher (60) vorgesehen sind, wobei der genannte zweite Instruktionszähler und die genannte zweite Instruktionsfolgesteuerung sich außerhalb des Chips befinden.

2. Programmgesteuerte Mikroprozessoranordnung nach Anspruch 1, dadurch gekennzeichnet, daß ferner eine Einrichtung (80, 82; Fig. 2) vorgesehen ist, die auf ein im Halbleiterchip (11) erzeugtes Verzweigungssignal, das angibt, daß die Bedingungen für eine erforderliche Verzweigung erfüllt sind, den Inhalt des zweiten Instruktionszähler (62) auf einen Wert ändert, der der Adresse der erforderlichen Verzweigungsinstruktion entspricht.

3. Programmgesteuerte Mikroprozessor Anordnung nach Anspruch 2, dadurch gekennzeichnet, daß ferner die Einrichtung zur Änderung außerhalb des Chips ein zweites Instruktionsregister (64) sowie Torschaltungen aufweist, welche beim Empfang des Verzweigungssignals den Inhalt des zweiten Instruktionsregisters in den zweiten Instruktionszähler durchschalten.

4. Programmgesteuerte Mikroprozessoranordnung nach Anspruch 1, 2 oder 3, dadurch gekennzeichnet, daß ferner eine Einrichtung (78, 79; Fig. 2) vorgesehen ist, die bei Auftreten eines im Chip (11) erzeugten Wartesignals die Operation der zweiten Instruktionsfolgesteuerung (66) sperrt.

## Revendications

1. Dispositif microprocesseur commandé par programme comportant une microplaquette semi-conductrice (11) sur laquelle est formé un microprocesseur comprenant un premier register d'instructions (36) contenant des instructions en cours servant à commander le microprocesseur, une première mémoire d'instructions (10), un premier compteur d'instructions (38) et un premier moyen de mise en séquence des instructions (40, figure 2) permettant d'accéder aux instructions contenues dans la première mémoire; une seconde mémoire d'instructions externe à la microplaquette (60, figure 2); des circuits (35, 68) permettant de charger alternativement le premier registre d'instructions (36) depuis la première ou la seconde mémoire d'instructions (10, 60); et des moyens de sélection du mode de chargement des instructions (45, figure 6) permettant de déterminer si l'instruction suivante à charger dans le premier registre d'instructions doit provenir de la première ou de la seconde mémoire d'instructions, ledit dispositif microprocesseur étant caractérisé en ce qu'il comporte en outre un second compteur d'instructions (62, figure 2) et un second moyen de mise en séquence des instructions (66, figure 2) permettant d'accéder aux instructions contenues dans la seconde mémoire d'instructions (60), ledit second compteur d'instructions et ledit second moyen de mise en séquence étant externes à la microplaquette.

2. Dispositif microprocesseur selon la revendication 1, caractérisé en outre en ce qu'il comporte des moyens (80, 82) permettant, en réponse à un signal de branchement engendré depuis la microplaquette et indiquant que les conditions requises aux fins d'un branchement sont satisfaites, de modifier la valeur de second compteur d'instructions (62) de telle sorte qu'elle corresponde à l'adresse de l'instruction afférente au branchement requis.

3. Dispositif microprocessur selon la revendication 2, caractérisé en outre en ce que les moyens permettant de modifier la valeur du second compteur d'instructions comprennent, de façon externe à la microplaquette, un second register d'instructions (64) et des moyens permettant de transférer le contenu de ce dernier au second compteur d'instructions lors de la réception du signal de branchement.

4. Dispositif microprocessur selon la revendication 1, 2 ou 3, caractérisé en outre en ce qu'il comporte des moyens (78, 79) permettant, en réponse à un signal d'attente engendré depuis la microplaquette, d'inhiber le fonctionnement du second moyen de mise en séquence des instructions (66).

FIG. 2

```
0 1 2 3 4 5 6 7 8 9 10 11
```
| OD CODE | OPERAND |
|---------|---------|

GENERAL FORMAT SHORT INSTRUCTIONS

FIG. 4

FIG. 5 {
```
0 1 2 3 4 5 6 7 8 9 10 11
```
| OD CODE | OPERAND |
|---------|---------|

LONG INSTRUCTIONS FIRST WORD

```
0 1 2 3 4 5 6 7 8 9 10 11
```
| CC | BRANCH ADDRESS |
|----|----------------|

SECOND WORD
}

0 020 972

FIG. 3

FIG. 6

FIG. 7

FIG. 8

3